# EUROPEAN PATENT SPECIFICATION

(11) **EP 1 500 081 B1**
(45) Date of publication and mention of the grant of the patent: **27.08.2008**
(21) Application number: 03712489.8
(22) Date of filing: 09.04.2003
(51) Int. Cl.: G10L 15/22

(54) **METHOD AND SYSTEM FOR SPEECH RECOGNITION OF SYMBOL SEQUENCES**
VERFAHREN UND GERÄT FÜR SPRACHERKENNUNG VON SYMBOLSEQUENZEN
PROCEDE ET SYSTEME POUR LA RECONNAISSANCE VOCALE DE SEQUENCES DE SYMBOLES

(30) Priority: 12.04.2002 DE 10216117
(43) Date of publication of application: 26.01.2005
(73) Proprietor: Philips Intellectual Property & Standards GmbH, 20099 Hamburg (DE); Koninklijke Philips Electronics N.V., 5621 BA Eindhoven (NL)
(72) Inventor: BREUER, Richard, c/o Philips IP & Standards GmbH, D-52066 Aachen (DE)
(74) Representative: Volmer, Georg
(86) International application number: PCT/IB2003/001281
(87) International publication number: WO 2003/088210

(56) References cited:
- EP-A- 0 865 031
- US-A- 4 870 686
- US-A- 5 712 957

## Description

The invention relates to various methods of speech recognition of symbol sequences in which initially a spoken and recognized first symbol sequence is output by means of a speech output device for verification by a user and in case of a faulty recognition of the first symbol sequence a spoken second symbol sequence is recognized and compared with the first symbol sequence, a sub-symbol sequence of the first symbol sequence being determined partly corresponding to the second symbol sequence and having the lowest number and/or a predefined number of deviations from the second symbol sequence and, finally, the first symbol sequence is corrected at the position of the sub-symbol sequence with the aid of the second symbol sequence. Furthermore, the invention relates to corresponding systems for speech recognition of symbol sequences by a speech recognition device for the recognition of spoken symbol sequences and commands, comprising a speech output device for outputting a spoken and recognized first symbol sequence to be verified by a user, comprising a comparing device for comparing a spoken and recognized second symbol sequence with the first symbol sequence in case of an erroneous recognition of the first symbol sequence and then determining a sub-symbol sequence of the first symbol sequence, which sub-symbol sequence partly corresponds to the second symbol sequence and has the smallest and/or a predefined number of deviations from the second symbol sequence, and comprising a correction device for correcting the first symbol sequence at the position of the sub-symbol sequence on the basis of the second symbol sequence.

A method of the type defined in the opening paragraph is known from EP 0 865 031 A2. The method described there is a method of speech recognition of sequences of digits, for example telephone numbers. To avoid a speech application proceeding with an erroneously recognized digit sequence, the recognized digit sequence is first output to the user. The user can then either acknowledge the correctness of the recognized digit sequence or he has the possibility of inputting a second digit sequence for correcting the first digit sequence. This may be a completely new digit sequence but also part of the digit sequence that has not been recognized correctly. In so far as only part of the original symbol sequence is input as the second symbol sequence, all sub-sequences of the digit sequence that was input first are compared with the second digit sequence - i.e. a kind of correction digit sequence - that have the same length as the second digit sequence. Then the sub-sequence of the first digit sequence having the smallest number of deviations from the second digit sequence is sought and the digits in the sub-digit sequence which differ from the second digit sequence are replaced by the digits of the second digit sequence. The method has the advantage that the user need not enter the complete first digit sequence once again but only part of the first digit sequence to repeat a digit understood wrong. Such a form of correction corresponds to the natural and familiar way of conversation when the user talks with other people. Furthermore, it is faster than inputting a completely new digit sequence again. In addition, the prospective successful result in this method of correction is greater because by entering only part of the digit sequence the risk of entering new recognition errors is smaller.

However, with this method only the errors are corrected in which a wrong digit was understood at a certain digit position. More particularly when the speech input takes place among much ambient noise, it may frequently happen that the system does not recognize a digit at all or recognizes an additional digit wrong which the user himself has not input. Such errors, however, cannot be corrected with the method described above. In addition, the system is only capable of outputting a certain corrected version of the originally recognized digit sequence. If this is not the right correction, the user is to input anew a digit sequence or a sub-digit sequence. In the cases where the second digit sequence input for correction does not unambiguously match a certain sub-sequence of the digit sequence recognized first, more feedback from the user is necessary. The correction method may then last relatively long, so that a new entry of the complete first digit sequence would then be more favorable.

It is an object of the present invention to improve a method of the type defined in the opening paragraph in that the correction of an erroneously understood symbol sequence can be made simpler, faster and with more comfort to the user.

This object is achieved in a variant of the invention by a method of the type defined in the opening paragraph in which determining the correcting sub-symbol sequence comprises a comparison of the second symbol sequence with such sub-symbol sequences of the first symbol sequence that are a number of symbols longer or shorter than the second symbol sequence. This is understood to mean that checks are made whether at at least one symbol position in the sub-symbol sequence a different symbol is located than in the second symbol sequence, whether the sub-symbol sequence as against the second symbol sequence has at least one additional symbol or whether at least one symbol is lacking in the sub-symbol sequence as against the second symbol sequence. This achieves that the method also functions in the cases where a symbol was recognized at all or a symbol not spoken by the user was recognized wrong.

For determining the first symbol sequence after the matching sub-symbol sequence, which first symbol sequence is to be corrected by the second symbol sequence, there are various possibilities:

In a preferred example of embodiment initially a search is made for a sub-symbol sequence that has the same length as the second symbol sequence, after that for at least a sub-symbol sequence that is longer than the second symbol sequence and, finally, for at least a sub-symbol sequence that is shorter than the second symbol sequence. This order is selected because a symbol is more likely to have been understood erroneously than that a symbol has been understood additionally or even not understood at all. In addition, in most speech recognition systems it is more probable for, for example as a result of background noise, an additional symbol not to be understood than for an uttered symbol not to be registered.

It is also preferred first to search for such sub-symbol sequences which have a deviation from the second symbol sequence at exactly one symbol position, while a deviation may be another, a lacking or an additional symbol. Subsequently, a search is first made for sub-symbol sequences that have such a deviation at exactly two symbol positions. If during this search no suitable sub-symbol sequence is determined, the search may be aborted and the user is requested to enter the complete new input because the probability of the correction being correct which contains more than two symbol changes is relatively small.

In a particularly preferred example of embodiment the following types of deviation of sub-symbol sequences are searched for when the sub-symbol sequence is determined:
1. sub-symbol sequences which have the same length as the second symbol sequence and have a different symbol than the second symbol sequence at a certain number of symbol positions.
2. sub-symbol sequences which have an additional symbol at a certain number of symbol positions compared with the second symbol sequence and which otherwise match the second symbol sequence or have a different symbol than the second symbol sequence at a certain number of symbol positions.
3. sub-symbol sequences in which a symbol is lacking at a certain number of symbol positions compared with the second symbol sequence and which otherwise match the second symbol sequence or have a different symbol than the second symbol sequence at a certain number of symbol positions.

The symbol positions at which there is a different symbol will henceforth be called "error fillings" and the symbol positions at which a symbol is lacking or at which there is an extra symbol will be called "error positions". The number of error fillings and/or error positions as well as the type of error positions (one symbol too many or too few) may be predefined as parameters for the search. For example, in a first step a specific search may be made for sub-symbol sequences that are equally long and have a different symbol, sub-symbol sequences that are one symbol shorter and sub-symbol sequences that are exactly one symbol longer. In a further step may then be searched for sub-symbol sequences that have two error fillings as well as sub-symbol sequences that have both an error filling and an error position. This means that in this second step certain sub-symbol sequences are searched for which have deviations at two symbol positions. It is also possible to search for sub-symbol sequences having exactly three predefined deviations etc.

Preferably, a search is then made in the first symbol sequence for exactly one sub-symbol sequence for each of these types of deviation with a desired number of certain deviations i.e. with a certain number of error positions and/or error fillings. The second symbol sequence is then compared with respective different sub-symbol sequences of the first symbol sequence, which have each a length corresponding to the second symbol sequence as well as to the respective type of deviation. In this comparison a start is made with the sub-symbol sequence that forms the end of the first symbol sequence. Then, in a step-by-step manner, the sub-symbol sequence to be compared is shifted forwards by one symbol sequence in the first symbol sequence until in the end a sub-symbol sequence of the desired type of deviation is found. The search for the sub-sequence of the respective type is then aborted. If none of the desired sub-sequences is found, searches are made until, finally, the second symbol sequence is compared with the sub-symbol sequence that forms the beginning of the first symbol sequence i.e. until the start of the first symbol sequence has been reached.

In this method it is assumed that the user when entering the second symbol sequence, has a tendency to enter once again the whole symbol sequence that has been recognized erroneously starting from the error position. As a result of the order of the comparison, starting with the sub-symbol sequence situated at the end of the first symbol sequence, it is achieved in consequence that the error is probably properly recognized and corrected very fast.

The comparison of the second symbol sequence with a longer sub-symbol sequence of the first symbol sequence is preferably effected in the way that at changing symbol positions of the sub-symbol sequence the respective symbol is ignored and the respective remainder sub-symbol sequence is compared with the second symbol sequence.

As an example of this may be considered a second symbol sequence of length n which is to be compared with a sub-symbol sequence of length n+1. First the second symbol sequence is then compared with the last n symbols of the sub-symbol sequence and the first symbol of the sub-symbol sequence is then ignored. Subsequently, the second symbol of the sub-symbol sequence is ignored in that the second symbol sequence is compared with a subsidiary sequence of the sub-symbol sequence, which is formed by the first symbol and the last n-1 symbols of the sub-symbol sequence. The last thing done is then the comparison with the first n symbols of the sub-symbol sequence and the last symbol of the sub-symbol sequence is ignored.

Similarly, also during a comparison of a second symbol sequence with a sub-symbol sequence which has two additional symbols, two respective symbols may be ignored and the symbol positions of the sub-symbol sequence at which the respective symbols are to be ignored can be "shifted along" in the sub-symbol sequence one by one.

In like manner a comparison is made of the second symbol sequence with a shorter sub-symbol sequence of the first symbol sequence. At respective changing symbol positions of the second symbol sequence a symbol is ignored and the respective remainder sequence of the second symbol sequence is compared with the sub-symbol sequence.

In another variant according to the invention the object is achieved by a method of the type defined in the opening paragraph in which a plurality of alternatives of corrected versions of the first symbol sequence are determined and issued to the user for verification purposes until a positive acknowledgement of an issued, corrected version or an abort command is received or until a limit value defined as an abort criterion is reached.

An abort command may be a command explicitly given by the user. More particularly, however, this may also be the entering of a new symbol sequence which is recognized by the system, after which the system then assumes that the user would like to abort the running correction.

The limit value defined as the abort criterion may be, for example, a time limit. In a preferred example of embodiment a maximum number of alternative, corrected versions, for example six different versions may be predefined as an abort criterion. Then only a maximum of this number of different versions is determined or issued respectively. If none of these corrected versions is true, the method is aborted.

In another preferred example of embodiment all corrected versions of the first symbol sequence are output as a maximum, in which the number of deviations from the originally recognized first symbol sequence is situated below a predefined maximum value. For.example, in a particularly preferred example of embodiment only correction versions are output, in which a maximum of two symbol positions of the initially recognized first symbol sequence were corrected.

This method of determining and outputting a plurality of alternative corrections is advantageous in that the user is not immediately requested to input a new second symbol sequence after he has made an error in the first attempted correction. This method then particularly has advantages when there are a plurality of substantially equally good alternative correction possibilities as a result of the type of the first symbol sequence and as a result of the keyed-in second symbol sequence.

In a particularly preferred example of embodiment the several versions of correction are determined according to the method defined above in which also a comparison of the second symbol sequence with such sub-symbol sequences of the first symbol sequence is made which are a number of symbols longer and/or shorter than the second symbol sequence. In such a method the chance of finding the alternative, equivalent correction versions is higher than if only a simple comparison is made of the second symbol sequence with equally long sub-symbol sequences of the first symbol sequence.

The methods according to the invention thus form both individually and in combination a highly comfortable instrument for correction of arbitrary symbol sequences input per speech utterance. It is expressly stated here that the symbol sequences may be an arbitrary sequence of any individually uttered symbols and not only the sequences of digits such as, for example telephone numbers, defined above. For example, the symbol sequence may also be a different sequence of alphanumeric digits, for example, a spelled word or the like. Similarly, the symbols may also be individual words or little names of pictures or specific signs such as "asterisk", "rhombus", "plus", "minus" which are to be pronounced in a certain sequence after each other and which are to be recognized by the system.

The method according to the invention may be installed in any speech-controlled application or speech applications, respectively, for example in automatic speech dialogue systems or in speech controls for devices or installations.

For implementing the method mentioned first, a system for speech recognition of symbol sequences of the type defined above is necessary which is characterized in that the comparator device comprises means for making a comparison of the second symbol sequence with such sub-symbol sequences of the first symbol sequence that are a number of symbols longer or shorter than the second symbol sequence.

For implementing the method explained last, a system of the type defined in the opening paragraph needs to have means for determining a plurality of alternative, corrected versions of the first symbol sequence and outputting it to the user for verification purposes, as well as an interrupt device which upon receipt of a positive acknowledgement of an output corrected version or of an abort command from the user or when a limit value defined as an abort criterion is reached, terminates the further finding and/or issuing of alternatives of corrected versions of the first symbol sequence. The comparator device may then preferably be structured such that a comparison of the second symbol sequence with shorter or longer sub-symbol sequences is possible.

The systems according to the invention may in essence be produced by means of suitable software on a computer of a speech dialogue system or of a speech control of a device. For example, the speech recognition device, the comparator device, the correction device and the interrupt device may be fully produced as software modules. It is only necessary for the systems to include a possibility of speech output, for example, in addition to a loudspeaker with an amplifier an arrangement for generating speech based on computer-readable data. An example for this is a TTS converter (Text-To-Speech converter) which can also be produced by means of suitable software.

These and other aspects of the invention are apparent from and will be elucidated with reference to the embodiments described hereinafter.

In the drawings:
Fig. 1 is a schematic block diagram for a speech recognition system,
Figs. 2a to 2d show a flow chart to explain the correction method,
Fig. 3 a shows a flow chart for explaining the correction of a sub-symbol sequence which has the same length as the second symbol sequence,
Fig. 3b shows a flow chart for explaining the correction of a sub-symbol sequence which is longer than the second symbol sequence,
Fig. 3c shows a flow chart for explaining the correction of a sub-symbol sequence which is shorter than the second symbol sequence,
Fig. 4 shows a flow chart for explaining a comparison of two symbol sequences which differ by one symbol in length.

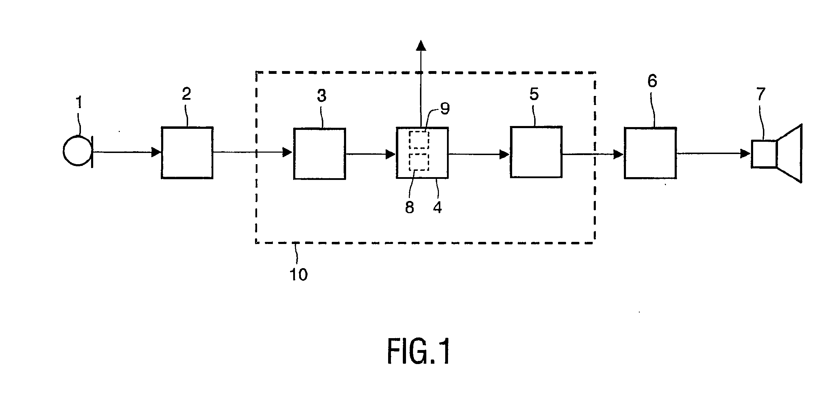

The example of embodiment shown in Fig. 1 of a speech recognition system for symbol sequences comprises a microphone 1, two amplifiers 2, 6 and a loudspeaker 7. In addition, the system includes a control arrangement 10 which comprises a speech recognition device 3, an evaluation device 4 and a TTS converter 5. The control arrangement 10 i.e. the speech recognition device 3, the evaluation device 4 and the TTS converter 5 may be produced in the form of software modules on a suitable computer, for example, on a server.

Further possibilities of structuring the system according to the invention in detail may be learnt from EP 0 865 031 A2, more particularly from the example of embodiment explained there. Reference is expressly made to this document and the quotations of further documents mentioned there.

Via the microphone 1 speech inputs from a user are captured which are amplified by the amplifier 2 and transferred to the speech recognition module 3 of the control arrangement 10. The speech inputs may be arbitrary speech inputs, but more particularly speech inputs for controlling the system such as symbol sequences, for example sequences of digits such as telephone numbers or the like.

For simplicity a digit sequence is started from as an example for the input of a symbol sequence. Therefore, often the term digit instead of the more general term symbol is used. As already explained above, the symbol sequence may, however, also be a sequence of arbitrary other symbols.

The speech input recognized by the speech recognition device is then transferred to the evaluation device 4 in computer-coded form, for example, in ASCII code. When the recognized speech input from the user is a digit sequence, this sequence is output via a TTS converter 5 and the amplifier 6 and the loudspeaker 7 to the user, to be checked again. When a recognized digit sequence is output for verification by the user, also the method mentioned in EP 0 865 0831 A2 may further be utilized in which a prosody in pairs is generated for the output.

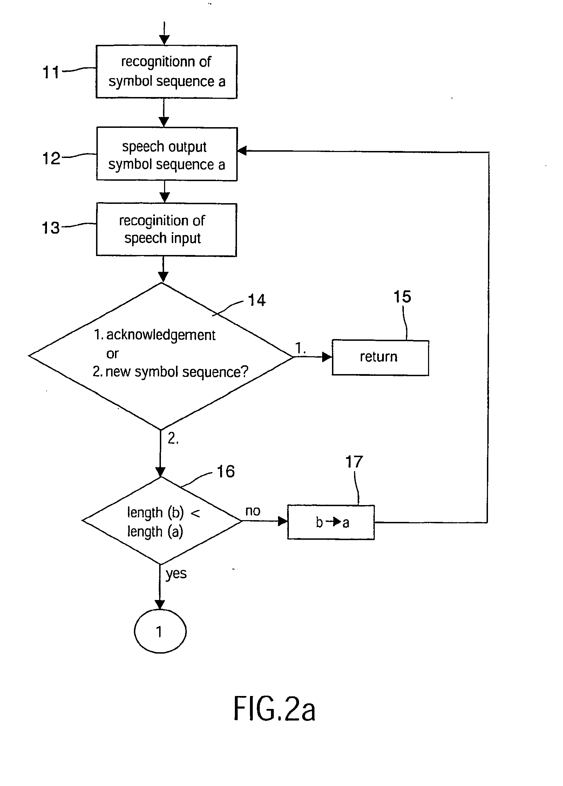

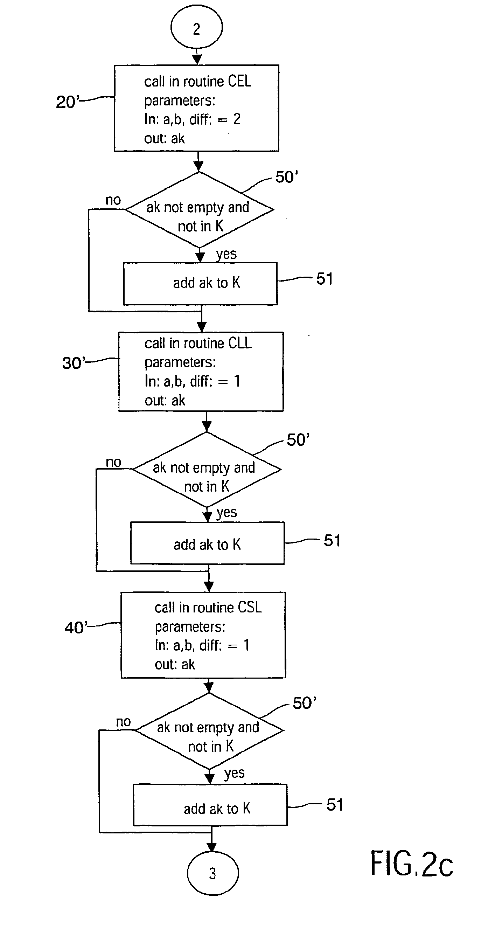

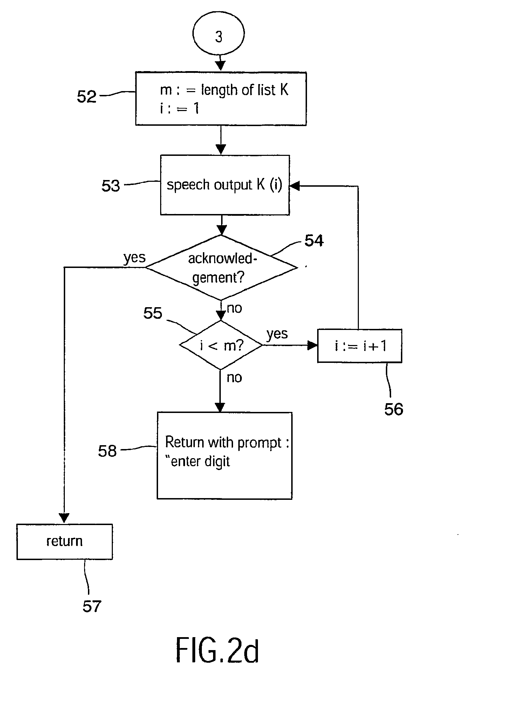

In the following will be explained in detailed manner with reference to the flow chart shown in Figs. 2a to 2d a correction of an erroneously recognized digit sequence by means of the two methods according to the invention. A combination of the two methods is used i.e. a comparison of the entered second digit sequence with equally long, longer or shorter sub-sequences of digits of the recognized first symbol sequence takes place, and various possible variants of corrected first symbol sequences are calculated and output to the user for him to verify them.

The method here begins in method step 11 with the recognition of a first symbol sequence a which is to be used within an arbitrary speech application not further shown. The recognized first symbol sequence a is then, in method step 12, output by means of the speech output device 5, 6, 7 to the user for verification purposes.

In the following it is assumed by way of example that the user has entered the digit sequence "8891219" after which the speech system has understood the digit sequence "88912219". The system will then output, for example in step 12, a message such as: "You have entered the number 88912219. Is this correct?"

The user can then react in that he either acknowledges the number for example by entering the command "yes" in so far as the correct number was recognized or, such as in the present case in which the number was recognized erroneously, accordingly answers in the negative. In the program run shown it is assumed that the user - as is the case with a normal dialogue with a natural person - immediately enters a new sub-symbol sequence to correct the digit sequence recognized erroneously. In the present concrete example he could enter only the end "1219" as a second digit sequence.

Therefore in the method step 14 is first checked whether an acknowledgement has followed or whether a second digit sequence was entered for correction purposes. If an acknowledgement is registered, the further correction method is aborted and in method step 15 the speech application for which the digit sequence as such was entered is proceeded with. In the other case the newly entered second digit sequence b is used for correction of the erroneously recognized digit sequence a.

For this purpose, it is checked in method step 16 whether the length of the second digit sequence b is smaller than the length of the original first digit sequence a. If this is not the case, the user is assumed to simply have repeated the complete first digit sequence once again. Therefore, in this case in method step 17 the whole recognized first digit sequence a is exchanged for the recognized second digit sequence b and, subsequently, this newly entered second digit sequence b is then output as digit sequence a to the user in method step 12 for acknowledgement. In method step 13 the answer of the user is recognized and an acknowledgement or a new digit sequence b is waited for etc.

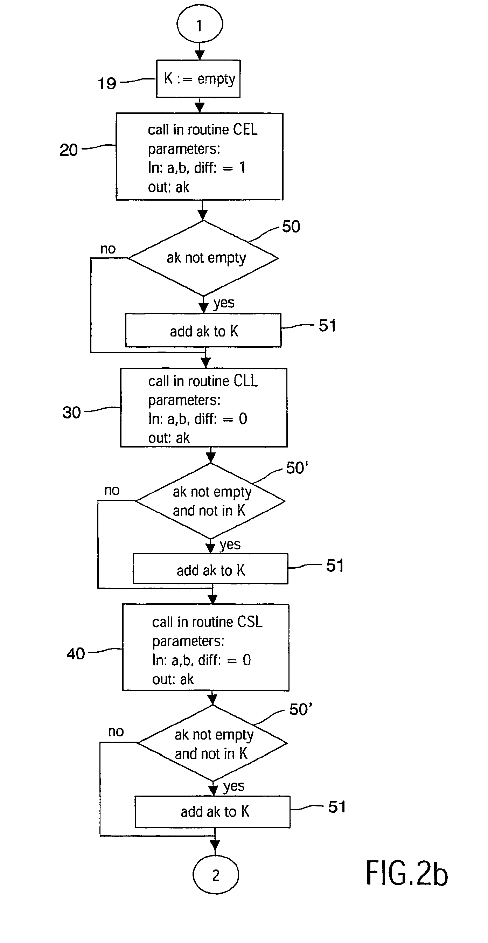

If, on the other hand, during the method step 16 it turns out that the second digit sequence b is shorter than the first digit sequence a, method step 19 in Fig. 2b is proceeded with.

In the method steps 19 to 51 a list K of various corrected versions ak of the originally recognized first digit sequence a is generated. For this purpose first the list K with the corrected versions ak is defined as being empty in an initialization step 19.

Then, in method step 20 a first routine CEL is carried out. This routine CEL generates a corrected version ak of the first recognized digit sequence a in which the second digit sequence b has been exchanged for the sub-sequence u of the first digit sequence a, which sub-sequence has the same length as the second digit sequence b and which differs only by a single digit from the second digit sequence b. This is laid down by the parameter "diff' which denotes the number of error positions in the sub-sequence and which is here set to 1.

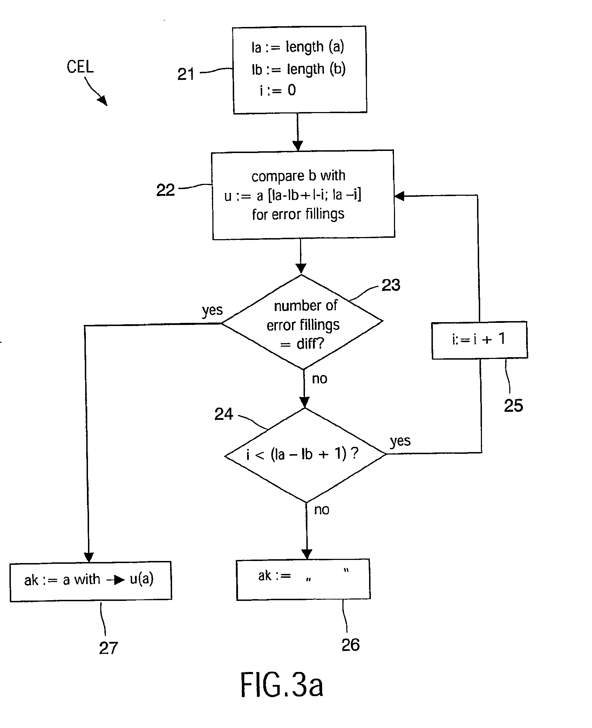

The method routine in the method step 20 i.e. in the routine CEL is shown in more detail in Fig. 3a. Here in initialization step 21 the parameters 1a and 1b are set as length of the digit sequence a and digit sequence b, respectively.

Furthermore, a running variable i is set to 0. After this initialization step 21, the second digit sequence b is compared with the sub-sequence u of the first digit sequence a for error fillings in method step 22 which the length of the second digit sequence b has. The sub-sequence is started with which forms the end of the first digit sequence a, that is to say, the digits of the first digit sequence a between the position 1a-1b+1 and the position 1a are compared with the digit sequence b. In the notation used here in the flow charts the symbol positions for the symbol sequence of length n run from 1 to n.

In step 23 is then checked whether the number of error fillings corresponds to the desired value diff which number of error fillings is determined in step 22 i.e. the number of positions at which there is another digit in the sub-sequence u than in the second digit sequence b,. In the method step 20 in Fig. 2b this parameter diff was set to 1 and therefore a check is made here whether the sub-sequence u differs from the second digit sequence b in only one position.

In the example mentioned above this is the case, because the recognized first digit sequence a is "88912219" and the user has entered the second digit sequence b "1219" for correction. The sub-sequence next to be compared in step 22 is therefore "2219". This sub-sequence deviates from the second digit sequence b exactly at the first position. Therefore in step 27 a corrected version ak of the first digit sequence a is generated in that the determined sub-sequence u in the first digit sequence a is replaced by the second digit sequence b. In the example of embodiment mentioned above the new, corrected version ak "88911219" would consequently be generated.

In so far as it is found in step 23 that the number of error fillings does not correspond to the desired difference diff, first a check is made in method step 24 whether the running variable i is smaller than the value 1a-1b+1. If this is the case i is incremented by 1 and again the comparison is made in step 22. As a result of this loop the sub-sequence u is shifted forwards step by step by one position in the first digit sequence a. Once i has reached the value 1a-1b+1, the sub-sequence u is examined which sub-sequence u consists of the digits of the positions 1 to 1b of the first digit sequence a i.e. the sub-sequence u which forms the beginning of the first digit sequence a is examined. In this case there is no further sub-sequence to be examined and the sub-routine 20 is aborted while an empty string is returned in step 26 as a determined corrected digit sequence ak.

In the next method step 50 in Fig. 2b it is then checked whether the digit sequence ak returned by the routine CEL is not an empty string i.e. whether a suitable corrected digit sequence was generated. If this is the case, in step 51 the returned digit sequence ak is added to the list K.

Subsequently, in step 30 a further routine CLL is called in. This routine generates from the recognized first digit sequence a and the second digit sequence b as well as the again predefined difference Diff of error fillings a new, corrected digit sequence ak where this routine CLL, however, makes a comparison with such sub-sequences u of the first digit sequence a that are one digit shorter than the second digit sequence b.

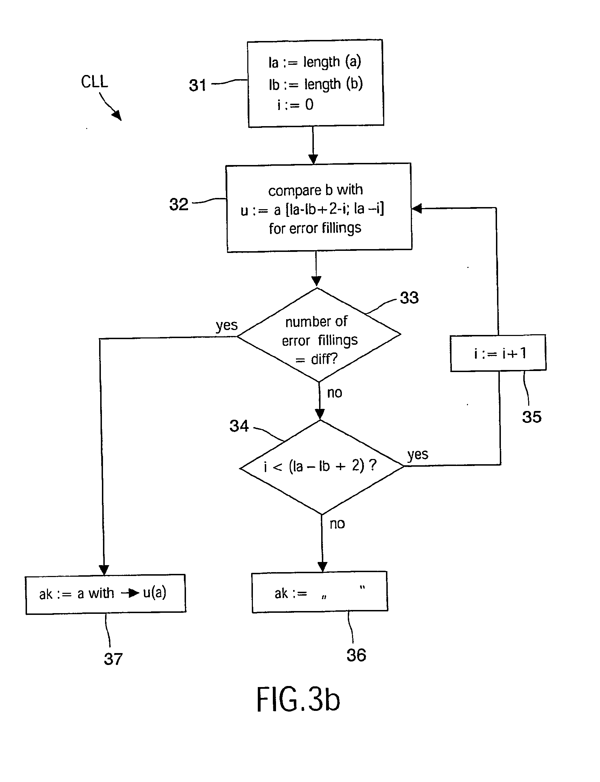

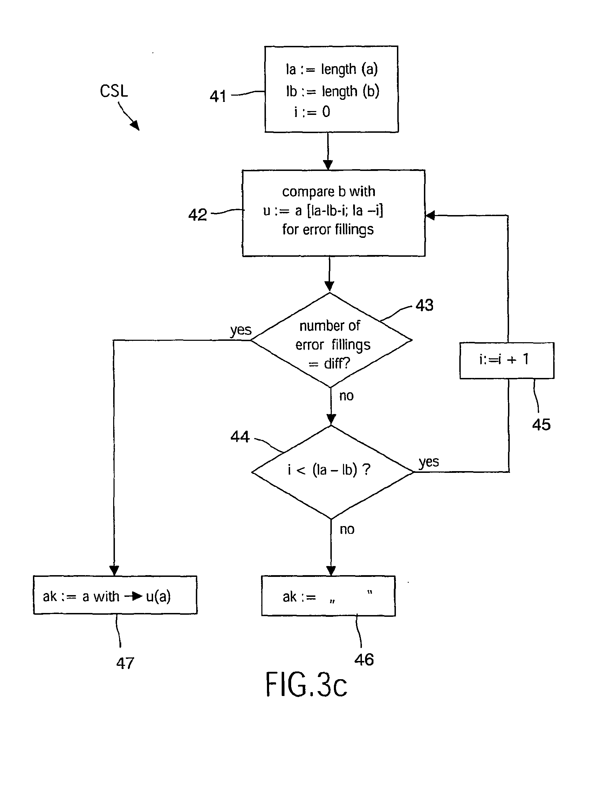

This routine CLL is shown in more detail in Fig. 3b. The method routine in essence corresponds to the routine CEL in method step 20, which is shown in Fig. 3 a. The difference is only that here in method step 32 a comparison is made of the second digit sequence b with the sub-sequence u of the first digit sequence a, which runs from the position 1a-1b+2-i to the position 1a-i. In comparison, in method step 22 in the routine CEL the comparison with a sub-sequence u is made which runs from the position 1a-1b+1-i to the position 1a-i of the first digit sequence a. This means that in the method step 32 the sub-sequence u is one digit shorter than the second digit sequence b. Accordingly, in method step 34 there is provided that i does not reach the value 1a-1b+2.

In the method step 30 in Fig. 2b the parameter diff, which indicates the number of error fillings, is set to 0. This is the result because in the method according to step 30, as is shown in Fig. 3b, a shorter sub-sequence u is searched for, which therefore already has an error position anyway. Thus, similar to method step 20, a search is made for a sub-sequence u with exactly one deviation, only that this sub-sequence has an error position instead of an error filling.

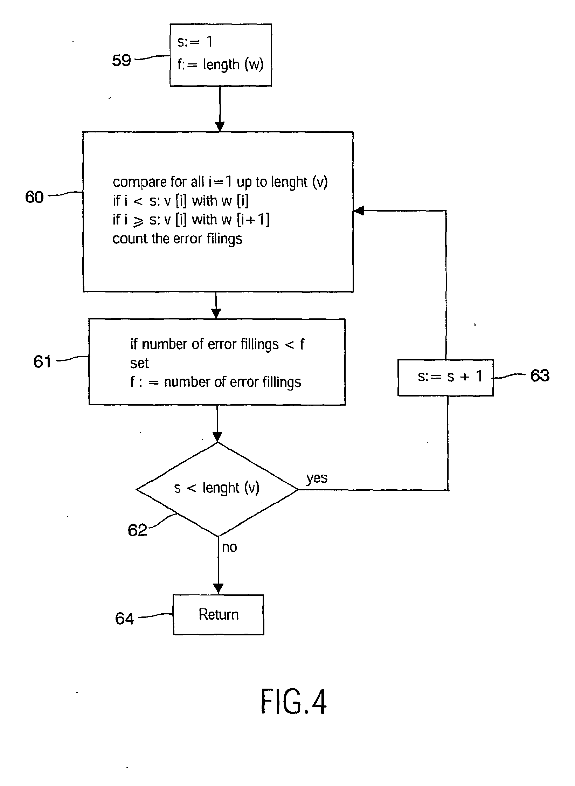

The making of the comparison of step 32 and the routine CLL is further explained in Fig. 4. It is generally assumed here that a shorter digit sequence v is compared with a digit sequence w that is one digit longer.

Initially first a running variable s is initialized at the value 1 and a further variable t is set to the length of the longer digit sequence w. This takes place in step 59. Subsequently, in step 60 for every i < s the i^{th} position of the shorter digit sequence v is compared with the i^{th} position of the longer digit sequence w and for all i ≥ s the i^{th} position of the shorter digit sequence v with the i+1 position of the longer digit sequence w, where i runs from the first position to the last position of the shorter digit sequence v. The number of error fillings is then determined each time. In this method according to step 60 the number at the s^{th} position of the longer digit sequence w is ignored and a comparison is made of the shorter digit sequence v with the remaining parts of the longer digit sequence w.

To stick to the concrete examples of the first digit sequence a and the second digit sequence b mentioned thus far, a comparison may be considered hereinafter of the second digit sequence b "1219" with the sub-sequence u "12219", which corresponds to the end of the recognized first digit sequence a. To start with, the first digit of the sub-sequence u "12219" is ignored and thus the second digit sequence b "1219" is compared with the digit sequence "2219". The number of error fillings is here equal to 1, because the two digit sequences considered deviate from each other in the first digit. Then, in step 61 a check is made whether the determined number of error fillings is smaller than the parameter f initialized at the length w at the beginning. If this is the case, f is set to the number of determined error fillings. In the present concrete example the parameter f is consequently set to 1.

Subsequently, in step 62 a check is made whether the running variable s is smaller than the length of the shorter digit sequence v. If not, the running variable s is incremented by 1 in step 63 and the method step 60 is carried out again. Therefore, the second element of the sub-sequence "12219" is ignored and a comparison of the remaining sequence "1219" with the second digit sequence b "1219" is made.

Then, in step 61 is again checked whether the number of the error fillings in this second check is smaller than the parameter f i.e. the number of error fillings in the first round. If so, the parameter f is replaced by the lower number. The parameter f thus corresponds to the number of error fillings that can be reached as a minimum in a comparison of a shorter symbol sequence with all possible sub-sequences of a symbol sequence that is one symbol longer.

In the present example the digit sequences to be compared in the second round are identical and the number of error fillings is consequently equal to 0. The parameter f is consequently set to 0.

Once s has reached the value of the length of v, the method is aborted i.e. the method is proceeded with until, finally, the second digit sequence "1219" is compared with the end of the sub-sequence u, this is to say, with the digits "2219". Then the parameter f is returned. This parameter f is then compared in the routine CLL as the number of the minimal error fillings with the desired number diff of the error fillings. If the values match, a sub-sequence having the predefined length difference is found whose minimum number of error fillings exactly corresponds with the desired number diff of error fillings.

In the example mentioned above this would be the case because in said second round the second digit sequence b "1219" corresponds to the elements "1219" of the sub-sequence u "12219" of the first digit sequence a. The number of the minimum error fillings consequently exactly corresponds to the value diff = 0 determined in step 30. As the corrected version ak of the recognized first digit sequence a is therefore found the sequence "8891219" which in the previous example for the rest exactly corresponds to the correct, first digit sequence a originally entered by the user.

In the method step 50' following next, a check is then made whether an empty string comes from method step 30 or whether a corrected version ak of the first digit sequence a was returned. If the string ak is not empty, a check is made whether this digit sequence ak is already present in the list K. Alternatively, in step 51 the new corrected version ak is added to the list K.

In step 40, a further routine CSL is finally called in, which is also to provide a corrected digit sequence ak on the basis of the entered first digit sequence a and the second digit sequence b as well as a desired number diff of error fillings. Here too, the number of error fillings diff is set to 0. This routine CSL is further explained in Fig. 3c. It makes a comparison of the second digit sequence b with such sub-sequences u of the first digit sequence a which are one digit shorter than the digit sequence b. For this purpose sub-sequences u are selected which comprise the positions 1a-1b-i up to 1a-i of the first digit sequence a, as this is shown in method step 42 in Fig. 3c. Accordingly, in method step 44 there is provided that i does not reach the value 1a-1b. Otherwise the method in the routine CSL in essence corresponds to the method steps in the routines CEL and CLL. The comparison in accordance with step 42 in the routine CSL corresponds to the comparison made in step 32 of the routine CLL explained in Fig. 4, with the only difference that now the sub-sequence u of the first digit sequence a forms the shorter digit sequence v and the second digit sequence b the sequence w that is one digit longer.

Also after the method step 40 in Fig. 2b a check is made in a method step 50' whether the returned symbol sequence ak is an empty string or whether the returned symbol sequence ak is already located in the list K of the corrected symbol sequences ak. Otherwise, the newly found corrected version ak is added to the list K.

Subsequently, in method step 20', again a comparison is made between the second digit sequence b and sub-sequences u of the first digit sequence a having the same length while, however, sub-sequences are searched for here that have error fillings at two positions. For this purpose the essentially same routine is used as in method step 20 where, however, the parameter diff is set to 2. Subsequently, in the method steps 50' and 51 again a return string ak is checked whether it is empty or not and then respectively added to the list K.

In method step 30' another comparison is made of the second digit sequence b with sub-sequences u of the digit sequence a which are one digit longer while now, however, sub-sequences u being searched for that additionally have a different digit at one position. This again happens by calling in routine CLL where, however, the parameter diff is set to 1. This means sub-sequences u are searched for here too, which sub-sequences u differ at two positions from the second digit sequence b either as a result of an error position or an error filling.

In the following steps 50 and 51 the corrected version ak found in step 30' is again added to the list K.

A last search step 40' then follows in which sub-sequences u of the first digit sequence a are searched for which are one digit shorter than the second digit sequence b and which additionally have an error filling at one position. The routine CSL according to Fig. 3c is used for this purpose too with the parameter diff being set to 1.

A corrected version ak of the first digit sequence a which version is found in this method step 40' is added to the list K in the next method steps 50', 51.

As a result the list K at this instant in the method exactly contains six different corrected versions ak of the first digit sequence a in so far as each of the routines 20, 30, 40, 20', 30', 40' has returned a different non-empty string.

In the next method steps this list K is acoustically output to the user. For this purpose a running variable m is set to be the length of the list K in step 52 and a running variable i is set to 1.

Then in step 53 the first entry of the list K is output and in step 54 checked whether the user has acknowledged this output. If this is the case, this output digit sequence is considered to be the correct digit sequence and the correction method is terminated in step 57 and a return is made to the speech application for which the input of the digit sequence as such was to be effected.

Alternatively, in step 55 a check is made whether the running variable i is even smaller than the length m of the list K. If this is the case, the value of the running variable i is incremented by 1 and thus in step 53 the next entry of the list K is output. If the end of the list K is reached, the value of the running variable i corresponds to the value m and the question in step 55 is answered in the negative. Subsequently, in step 58 a return is made to the actual speech application while then a prompt i.e. an output to the user is generated by which the user is requested to enter the digit sequence anew because the correction is impossible.

It should once again be pointed out that the method routine described above is only a special example of embodiment of the invention and the man of ordinary skill in the art has the possibility of varying the method at will at many positions.

For example, it is particularly possible to replace a found correcting sub-sequence u of the first digit sequence a not completely with the second digit sequence b but only those digits that differ from each other, or insert or omit digits at the appropriate positions, respectively.

## Claims

1. A method of speech recognition of symbol sequences in which initially a spoken and recognized first symbol sequence is output by means of a speech output device for verification by a user and in case of a faulty recognition of the first symbol sequence a spoken second symbol sequence is recognized and compared with the first symbol sequence, the sub-symbol sequence of the first symbol sequence being determined partly corresponding to the second symbol sequence and having the lowest number and/or a predefined number of deviations from the second symbol sequence, and, finally, the first symbol sequence is corrected at the position of the sub-symbol sequence with the aid of the second symbol sequence, **characterized in that** determining the correcting sub-symbol sequence comprises a comparison of the second symbol sequence with such sub-symbol sequences of the first symbol sequence that are a number of symbols longer or shorter than the second symbol sequence.

2. A method as claimed in claim 1, **characterized in that** initially a search is made for a sub-symbol sequence that has the same length as the second symbol sequence, after that for at least a sub-symbol sequence that is longer than the second symbol sequence and, finally, for at least a sub-symbol sequence that is shorter than the second symbol sequence.

3. A method as claimed in claim 1 or 2, **characterized in that** when the sub-symbol sequence of the first symbol sequence is determined first sub-symbol sequences are scarched for that have a deviation from the second symbol sequence at exactly one symbol position and, finally, sub-symbol sequences that have a deviation from the second symbol sequence at exactly two symbol positions while a deviation may be another, a lacking or an additional symbol.

4. A method as claimed in any one of the claims 1 to 3, **characterized in that** when the sub-symbol sequence of the first symbol sequence is determined, a search is to be made for the following types of deviations of sub-symbol sequences:
- sub-symbol sequences which have the same length as the second symbol sequence and have a different symbol than the second symbol sequence at a certain number of symbol positions,
- sub-symbol sequences which have an additional symbol at a certain number of symbol positions compared with the second symbol sequence and which otherwise match the second symbol sequence or have a different symbol than the second symbol sequence at a certain number of symbol positions,
- sub-symbol sequences in which a symbol is lacking at a certain number of symbol positions compared to the second symbol sequence and which otherwise match the second symbol sequence or have a different symbol than the second symbol sequence at a certain number of symbol positions.

5. A method as claimed in claim 4, **characterized in that** for a certain type of deviation a search is made for exactly one sub-symbol sequence of the first symbol sequence and always the second symbol sequence is compared with various sub-symbol sequences of the first symbol sequence which have each a length matching the second symbol sequence and type of deviation, where the respective comparison is started with the sub-symbol sequence that forms the end of the first symbol sequence and then, step by step the sub-symbol sequence to be compared is shifted one symbol position forwards in the first symbol sequence until a sub-symbol sequence of the desired type of deviation is found or until, finally, the second symbol sequence is compared with the sub-symbol sequence that forms the beginning of the first symbol sequence.

6. A method as claimed in one of the claims 1 to 5, **characterized in that** when the second symbol sequence is compared with a longer sub-symbol sequence of the first symbol sequence, a symbol at respectively changing symbol positions of the sub-symbol sequence is ignored during comparison and the respective remaining sub-symbol sequence is compared with the second symbol sequence and when the second symbol sequence is compared with a shorter sub-symbol sequence of the first symbol sequence a symbol located at respective changing symbol positions of the second symbol sequence is ignored during comparison and the respective remainder sequence of the second symbol sequence is compared with the sub-symbol sequence.

7. A method of speech recognition of symbol sequences as claimed in claim 1, in which initially a spoken and recognized first symbol sequence is output for verification by a user by means of a speech output device (5, 6, 7) and when the first symbol sequence is recognized erroneously, a spoken second symbol sequence is compared with the first symbol sequence, a sub-symbol sequence of the first symbol sequence being determined that partly matches the second symbol sequence and has the lowest number and/or a predefined number of deviations from the second symbol sequence, and, finally, the first symbol sequence at the position of the sub-symbol sequence is corrected on the basis of the second symbol sequence, comprising that a plurality of alternatives of corrected versions of the first symbol sequence is determined and output to the user for verification purposes until a positive acknowledgement of an output corrected version or an abort command is received or until a limit value defined as an abort criterion is reached.

8. A method as claimed in claim 7, **characterized in that** a maximum of a predefined number of alternative corrected versions of the first symbol sequence is determined and output.

9. A method as claimed in claim 7, **characterized in that** at most all corrected versions of the first symbol sequence in which the number of deviations from the initially recognized first symbol sequence is situated below a maximum value, are determined and output.

10. A method as claimed in one of the claims 7 to 9, **characterized in that** the correcting sub-symbol sequence of the first symbol sequence is determined according to a method as claimed in any one of the claims 2 to 6.

11. A system for speech recognition of symbol sequences
- comprising a speech recognition device (3) for recognizing spoken symbol sequences and commands,
- comprising a speech output device (5, 6, 7) for outputting a spoken and recognized first symbol sequence to be verified by a user,
- comprising a comparator device (8) for comparing a spoken and recognized second symbol sequence with the first symbol sequence when the first symbol sequence is recognized erroneously and then determining a sub-symbol sequence of the first symbol sequence which partly corresponds with the second symbol sequence and then has the lowest and/or a predefined number of deviations from the second symbol sequence,
- and comprising a correction device (9) for correcting the first symbol sequence in the range of the sub-symbol sequence on the basis of the second symbol sequence,
**characterized in that** the comparator device (8) comprises means for making a comparison of the second symbol sequence with such sub-symbol sequences of the first symbol sequence that are a number of symbols longer or shorter than the second symbol sequence.

12. A system for speech recognition of symbol sequences as claimed in claim 11,
- comprising a speech recognition device (3) for recognizing spoken symbol sequences and commands,
- comprising a speech output device (5, 6, 7) for outputting a spoken and recognized first symbol sequence to be verified by a user,
- comprising a comparator device (8) for comparing a spoken and recognized second symbol sequence with the first symbol sequence when the first symbol sequence is recognized erroneously and then determining a sub-symbol sequence of the first symbol sequence which partly corresponds with the second symbol sequence and then has the lowest and/or a predefined number of deviations from the second symbol sequence,
- and comprising a correction device (9) for correcting the first symbol sequence in the range of the sub-symbol sequence on the basis of the second symbol sequence, comprising means for determining a plurality of alternative corrected versions of the first symbol sequence and outputting them to the user for verification purposes, and an interrupt device which terminates the further determining and/or outputting of alternatives of corrected versions of the first symbol sequence when a positive acknowledgement is received of an output corrected version or of an abort command from the user or when a limit value defined as an abort criterion is reached.

13. A computer program comprising program code means adapted to execute all steps of the method as claimed in any one of the claims 1 to 10 when the program is run on a computer.

14. A computer program comprising program code means as claimed in claim 13 which are stored on a data carrier that can be read by computer.

## Patentansprüche

1. Verfahren zur Spracherkennung von Symbolfolgen, bei dem zunächst eine gesprochene und erkannte erste Symbolfolge zur Verifikation durch einen Nutzer mittels einer Sprachausgabeeinrichtung ausgegeben wird und bei einer fehlerhaften Erkennung der ersten Symbolfolge eine gesprochene zweite Symbolfolge erkannt und mit der ersten Symbolfolge verglichen wird, wobei die Untersymbolfolge der ersten Symbolfolge ermittelt wird, welche mit der zweiten Symbolfolge teilweise übereinstimmt und die geringste Anzahl und/oder eine vorgegebene Anzahl von Abweichungen von der zweiten Symbolfolge aufweist, und schließlich die erste Symbolfolge im Bereich der Untersymbolfolge anhand der zweiten Symbolfolge korrigiert wird, **dadurch gekennzeichnet, dass** die Ermittlung der zu korrigierenden Untersymbolfolge einen Vergleich der zweiten Symbolfolge mit solchen Untersymbolfolgen der ersten Symbolfolge umfasst, die um eine Anzahl von Symbolen länger oder kürzer sind als die zweite Symbolfolge.

2. Verfahren nach Anspruch 1, **dadurch gekennzeichnet, dass** zunächst nach zumindest einer Untersymbolfolge gesucht wird, die die gleiche Länge wie die zweite Symbolfolge aufweist, dann nach zumindest einer Untersymbolfolge, die länger ist als die zweite Symbolfolge und schließlich nach zumindest einer Untersymbolfolge, die kürzer ist als die zweite Symbolfolge.

3. Verfahren nach Anspruch 1 oder 2, **dadurch gekennzeichnet, dass** bei der Ermittlung der Untersymbolfolge der ersten Symbolfolge zuerst nach Untersymbolfolgen, die genau an einer Symbolposition eine Abweichung von der zweiten Symbolfolge aufweisen, und schließlich nach Untersymbolfolgen gesucht wird, die genau an zwei Symbolpositionen eine Abweichung von der zweiten Symbolfolge aufweisen, wobei eine Abweichung ein anderes, ein fehlendes oder ein zusätzliches Symbol sein kann.

4. Verfahren nach einem der Ansprüche 1 bis 3, **dadurch gekennzeichnet, dass** bei der Ermittlung der Untersymbolfolge der ersten Symbolfolge nach folgenden Abweichungstypen von Untersymbolfolgen gesucht wird :
- Untersymbolfolgen, welche die gleiche Länge aufweisen wie die zweite Symbolfolge und die an einer bestimmten Anzahl von Symbolpositionen ein anderes Symbol aufweisen als die zweite Symbolfolge,
- Untersymbolfolgen, die an einer bestimmten Anzahl von Symbolpositionen im Vergleich zu der zweiten Symbolfolge ein zusätzliches Symbol aufweisen und die ansonsten mit der zweiten Symbolfolge übereinstimmen oder an einer bestimmten Anzahl von Symbolpositionen ein anderes Symbol aufweisen als die zweite Symbolfolge,
- Untersymbolfolgen, bei denen bei einer bestimmten Anzahl von Symbolpositionen im Vergleich zu der zweiten Symbolfolge ein Symbol fehlt und die ansonsten mit der zweiten Symbolfolge übereinstimmen oder an einer bestimmten Anzahl von Symbolpositionen ein anderes Symbol aufweisen als die zweite Symbolfolge.

5. Verfahren nach Anspruch 4, **dadurch gekennzeichnet, dass** für einen bestimmten Abweichungstyp nach genau einer Untersymbolfolge der ersten Symbolfolge gesucht wird und dabei jeweils die zweite Symbolfolge mit verschiedenen Untersymbolfolgen der ersten Symbolfolge verglichen wird, welche jeweils eine der zweiten Symbolfolge und dem Abweichungstyp entsprechende Länge aufweisen, wobei bei dem Vergleich jeweils mit der Untersymbolfolge begonnen wird, die das Ende der ersten Symbolfolge bildet, und dann schrittweise die zu vergleichende Untersymbolfolge innerhalb der ersten Symbolfolge um eine Symbolposition nach vorne verschoben wird, bis eine Untersymbolfolge des gewünschten Abweichungstyps gefunden ist oder bis schließlich die zweite Symbolfolge mit der Untersymbolfolge verglichen wird, die den Anfang der ersten Symbolfolge bildet.

6. Verfahren nach einem der Ansprüche 1 bis 5, **dadurch gekennzeichnet, dass** beim Vergleich der zweiten Symbolfolge mit einer längeren Untersymbolfolge der ersten Symbolfolge jeweils an wechselnden Symbolpositionen der Untersymbolfolge ein dort befindliches Symbol beim Vergleich ignoriert wird und die jeweilige Rest-Untersymbolfolge mit der zweiten Symbolfolge verglichen wird und beim Vergleich der zweiten Symbolfolge mit einer kürzeren Untersymbolfolge der ersten Symbolfolge jeweils an wechselnden Symbolpositionen der zweiten Symbolfolge ein dort befindliches Symbol beim Vergleich ignoriert wird und die jeweilige Restfolge der zweiten Symbolfolge mit der Untersymbolfolge verglichen wird.

7. Verfahren zur Spracherkennung von Symbolfolgen nach Anspruch 1, bei dem zunächst eine gesprochene und erkannte erste Symbolfolge zur Verifikation durch einen Nutzer mittels einer Sprachausgabeeinrichtung (5, 6, 7) ausgegeben wird und bei einer fehlerhaften Erkennung der ersten Symbolfolge eine gesprochene zweite Symbolfolge mit der ersten Symbolfolge verglichen wird, wobei eine Untersymbolfolge der ersten Symbolfolge ermittelt wird, welche mit der zweiten Symbolfolge teilweise übereinstimmt und dabei die geringste Anzahl und/oder eine vorgegebene Anzahl von Abweichungen von der zweiten Symbolfolge aufweist, und schließlich die erste Symbolfolge im Bereich der Untersymbolfolge anhand der zweiten Symbolfolge korrigiert wird, umfassend, dass mehrere Alternativen von korrigierten Versionen der ersten Symbolfolge ermittelt und an den Nutzer zur Verifikation ausgegeben werden, bis eine positive Bestätigung einer ausgegebenen korrigierten Version oder ein Abbruchbefehl empfangen wird oder bis ein als Abbruchkriterium definierter Grenzwert erreicht wird.

8. Verfahren nach Anspruch 7, **dadurch gekennzeichnet, dass** maximal eine vorgegebene Anzahl von alternativen korrigierten Versionen der ersten Symbolfolge ermittelt und ausgegeben wird.

9. Verfahren nach Anspruch 7, **dadurch gekennzeichnet, dass** höchstens alle korrigierten Versionen der ersten Symbolfolge, bei denen die Anzahl der Abweichungen von der zunächst erkannten ersten Symbolfolge unterhalb eines Maximalwerts liegt, ermittelt und ausgegeben werden.

10. Verfahren nach einem der Ansprüche 7 bis 9, **dadurch gekennzeichnet, dass** die zu korrigierende Untersymbolfolge der ersten Symbolfolge gemäß einem Verfahren nach einem der Ansprüche 2 bis 6 ermittelt wird.

11. System zur Spracherkennung von Symbolfolgen,
- mit einer Spracherkennungseinrichtung (3) zur Erkennung von gesprochenen Symbolfolgen und Befehlen,
- mit einer Sprachausgabeeinrichtung (5, 6, 7) zur Ausgabe einer gesprochenen und erkannten ersten Symbolfolge zur Verifikation durch einen Nutzer,
- mit einer Vergleichereinrichtung (8), um bei einer fehlerhaften Erkennung der ersten Symbolfolge eine gesprochene und erkannte zweite Symbolfolge mit der ersten Symbolfolge zu vergleichen und dabei eine Untersymbolfolge der ersten Symbolfolge zu ermitteln, welche mit der zweiten Symbolfolge teilweise übereinstimmt und dabei die geringste und/oder eine vorgegebene Anzahl von Abweichungen von der zweiten Symbolfolge aufweist,
- und mit einer Korrektureinrichtung (9), um die erste Symbolfolge im Bereich der Untersymbolfolge anhand der zweiten Symbolfolge zu korrigieren,
**dadurch gekennzeichnet, dass** die Vergleichereinrichtung (8) Mittel aufweist, um einen Vergleich der zweiten Symbolfolge mit solchen Untersymbolfolgen der ersten Symbolfolge durchzuführen, die um eine Anzahl von Symbolen länger oder kürzer sind als die zweite Symbolfolge.

12. System zur Spracherkennung von Symbolfolgen nach Anspruch 11,
- mit einer Spracherkennungseinrichtung (3) zur Erkennung von gesprochenen Symbolfolgen und Befehlen,
- mit einer Sprachausgabeeinrichtung (5, 6, 7) zur Ausgabe einer gesprochenen und erkannten erste Symbolfolge zur Verifikation durch einen Nutzer,
- mit einer Vergleichereinrichtung (8), um bei einer fehlerhaften Erkennung der ersten Symbolfolge eine gesprochene und erkannte zweite Symbolfolge mit der ersten Symbolfolge zu vergleichen und dabei eine Untersymbolfolge der ersten Symbolfolge zu ermitteln, welche mit der zweiten Symbolfolge teilweise übereinstimmt und dabei die geringste und/oder eine vorgegebene Anzahl von Abweichungen von der zweiten Symbolfolge aufweist,
- und mit einer Korrektureinrichtung (9), um die erste Symbolfolge im Bereich der Untersymbolfolge anhand der zweiten Symbolfolge zu korrigieren,
Mittel umfassend, um mehrere alternative korrigierte Versionen der ersten Symbolfolge zu ermitteln und an den Nutzer zur Verifikation auszugeben, und eine Unterbrechungseinrichtung, welche bei Empfang einer positiven Bestätigung einer ausgegebenen korrigierten Version oder eines Abbruchbefehls des Nutzers oder bei Erreichen eines als Abbruchkriterium definierten Grenzwerts die weitere Ermittlung und/oder Ausgabe von Alternativen von korrigierten Versionen der ersten Symbolfolge beendet.

13. Computerprogramm mit Programmcode-Mitteln, die ausgebildet sind, alle Schritte des Verfahrens nach einem der Ansprüche 1 bis 10 auszuführen, wenn das Programm auf einem Computer ausgeführt wird.

14. Computerprogramm mit Programmcode-Mitteln nach Anspruch 13, die auf einem computerlesbaren Datenträger gespeichert sind.

## Revendications

1. Procédé de reconnaissance de la parole de séquences de symboles dans lequel, initialement, une première séquence de symboles énoncée et reconnue est fournie en sortie au moyen d'un dispositif de sortie de parole en vue de sa vérification par un utilisateur et, en cas de reconnaissance erronée de la première séquence de symboles, une deuxième séquence de symboles énoncée est reconnue et comparée à la première séquence de symboles, la sous-séquence de symboles de la première séquence de symboles correspondant en partie à la deuxième séquence de symboles et comportant le plus petit nombre et/ou un nombre prédéfini d'écarts par rapport à la deuxième séquence de symboles étant déterminée, et, enfin, la première séquence de symboles est corrigée dans la position de la sous-séquence de symboles à l'aide de la deuxième séquence de symboles, **caractérisé en ce que** la détermination de la sous-séquence de symboles de correction comprend une comparaison de la deuxième séquence de symboles à de telles sous-séquences de symboles de la première séquence de symboles qui sont un certain nombre de symboles plus longues ou plus courtes que la deuxième séquence de symboles.

2. Procédé suivant la revendication 1, **caractérisé en ce qu'**est recherchée, initialement, une sous-séquence de symboles qui présente la même longueur que la deuxième séquence de symboles, ensuite au moins une sous-séquence de symboles qui est plus longue que la deuxième séquence de symboles et, enfin, au moins une sous-séquence de symboles qui est plus courte que la deuxième séquence de symboles.

3. Procédé suivant la revendication 1 ou 2, **caractérisé en ce que,** lorsque la sous-séquence de symboles de la première séquence de symboles est déterminée, sont recherchées des premières sous-séquences de symboles qui présentent un écart par rapport à la deuxième séquence de symboles dans une position de symbole exactement et, enfin, des sous-séquences de symboles qui présentent un écart par rapport à la deuxième séquence de symboles dans deux positions de symbole exactement tandis qu'un écart peut être un autre symbole, un symbole manquant ou un symbole supplémentaire.

4. Procédé suivant l'une quelconque des revendications 1 à 3, **caractérisé en ce que,** lorsque la sous-séquence de symboles de la première séquence de symboles est déterminée, doivent être recherchés les types suivants d'écarts de sous-séquences de symboles :
- les sous-séquences de symboles qui présentent la même longueur que la deuxième séquence de symboles et comportent un symbole différent par rapport à la deuxième séquence de symboles dans un certain nombre de positions de symbole;
- les sous-séquences de symboles qui comportent un symbole supplémentaire dans un certain nombre de positions de symbole par comparaison avec la deuxième séquence de symboles et qui, autrement, correspondent à la deuxième séquence de symboles ou comportent un symbole différent par rapport à la deuxième séquence de symboles dans un certain nombre de positions de symbole;
- les sous-séquences de symboles dans lesquelles un symbole manque dans un certain nombre de positions de symbole par comparaison avec la deuxième séquence de symboles et qui, autrement, correspondent à la deuxième séquence de symboles ou comportent un symbole différent par rapport à la deuxième séquence de symboles dans un certain nombre de positions de symbole.

5. Procédé suivant la revendication 4, **caractérisé en ce que,** pour un certain type d'écart, est recherchée une sous-séquence de symboles exactement de la première séquence de symboles et la deuxième séquence de symboles est toujours comparée à diverses sous-séquences de symboles de la première séquence de symboles qui présentent chacune une longueur correspondant à la deuxième séquence de symboles et au type d'écart, où la comparaison respective débute avec la sous-séquence de symboles qui forme la fin de la première séquence de symboles, puis, étape par étape, la sous-séquence de symboles à comparer est décalée d'une position de symbole vers l'avant dans la première séquence de symboles jusqu'à ce qu'une sous-séquence de symboles du type souhaité d'écart soit trouvée ou jusqu'à ce que, enfin, la deuxième séquence de symboles soit comparée à la sous-séquence de symboles qui forme le début de la première séquence de symboles.

6. Procédé suivant l'une quelconque des revendications 1 à 5, **caractérisé en ce que,** lorsque la deuxième séquence de symboles est comparée à une sous-séquence de symboles plus longue de la première séquence de symboles, un symbole dans des positions de symbole changeant respectivement de la sous-séquence de symboles est ignoré pendant la comparaison et la sous-séquence de symboles restante respective est comparée à la deuxième séquence de symboles et, lorsque la deuxième séquence de symboles est comparée à une sous-séquence de symboles plus courte de la première séquence de symboles, un symbole situé dans des positions de symbole changeantes respectives de la deuxième séquence de symboles est ignoré pendant la comparaison et la séquence restante respective de la deuxième séquence de symboles est comparée à la sous-séquence de symboles.

7. Procédé de reconnaissance de la parole de séquences de symboles suivant la revendication 1, dans lequel, initialement, une première séquence de symboles énoncée et reconnue est fournie en sortie en vue de sa vérification par un utilisateur au moyen d'un dispositif de sortie de parole (5, 6, 7) et lorsque la première séquence de symboles est erronément reconnue, une deuxième séquence de symboles énoncée est comparée à la première séquence de symboles, une sous-séquence de symboles de la première séquence de symboles qui correspond en partie à la deuxième séquence de symboles et présente le plus petit nombre et/ou un nombre prédéfini d'écarts par rapport à la deuxième séquence de symboles étant déterminée, et, enfin, la première séquence de symboles dans la position de la sous-séquence de symboles est corrigée sur la base de la deuxième séquence de symboles, en ce compris qu'une pluralité d'alternatives de versions corrigées de la première séquence de symboles est déterminée et fournie en sortie à l'utilisateur à des fins de vérification jusqu'à ce qu'un accusé de réception positif d'une version corrigée de sortie ou une commande d'abandon soit reçu ou jusqu'à ce qu'une valeur limite définie comme critère d'abandon soit atteinte.

8. Procédé suivant la revendication 7, **caractérisé en ce qu'**un maximum d'un nombre prédéfini de versions corrigées alternatives de la première séquence de symboles est déterminé et fourni en sortie.

9. Procédé suivant la revendication 7, **caractérisé en ce qu'**au plus toutes les versions corrigées de la première séquence de symboles dans laquelle le nombre d'écarts par rapport à la première séquence de symboles reconnue initialement est inférieur à une valeur maximum, sont déterminées et fournies en sortie.

10. Procédé suivant l'une quelconque des revendications 7 à 9, **caractérisé en ce que** la sous-séquence de symboles de correction de la première séquence de symboles est déterminée selon un procédé suivant l'une quelconque des revendications 2 à 6.

11. Système de reconnaissance de la parole de séquences de symboles
- comprenant un dispositif de reconnaissance de la parole (3) pour reconnaître des séquences de symboles énoncées et des commandes;
- comprenant un dispositif de sortie de parole (5, 6, 7) pour fournir en sortie une première séquence de symboles énoncée et reconnue à vérifier par un utilisateur;
- comprenant un dispositif comparateur (8) pour comparer une deuxième séquence de symboles énoncée et reconnue à la première séquence de symboles lorsque la première séquence de symboles est erronément reconnue, puis déterminer une sous-séquence de symboles de la première séquence de symboles qui correspond en partie à la deuxième séquence de symboles, et qui présente le plus petit nombre et/ou un nombre prédéfini d'écarts par rapport à la deuxième séquence de symboles,
- et comprenant un dispositif de correction (9) pour corriger la première séquence de symboles dans l'intervalle de la sous-séquence de symboles sur la base de la deuxième séquence de symboles;
**caractérisé en ce que** le dispositif comparateur (8) comprend des moyens pour comparer la deuxième séquence de symboles aux sous-séquences de symboles de la première séquence de symboles qui sont un certain nombre de symboles plus longues ou plus courtes que la deuxième séquence de symboles.

12. Système de reconnaissance de la parole de séquences de symboles suivant la revendication 11,
- comprenant un dispositif de reconnaissance de la parole (3) pour reconnaître des séquences de symboles énoncées et des commandes;
- comprenant un dispositif de sortie de parole (5, 6, 7) pour fournir en sortie une première séquence de symboles énoncée et reconnue à vérifier par un utilisateur;
- comprenant un dispositif comparateur (8) pour comparer une deuxième séquence de symboles énoncée et reconnue à la première séquence de symboles lorsque la première séquence de symboles est erronément reconnue, et puis déterminer une sous-séquence de symboles de la première séquence de symboles qui correspond en partie à la deuxième séquence de symboles, et qui présente le plus petit nombre et/ou un nombre prédéfini d'écarts par rapport à la deuxième séquence de symboles, et
- comprenant un dispositif de correction (9) pour corriger la première séquence de symboles dans l'intervalle de la sous-séquence de symboles sur la base de la deuxième séquence de symboles;
comprenant des moyens pour déterminer une pluralité de versions corrigées alternatives de la première séquence de symboles et les fournir en sortie à l'utilisateur à des fins de vérification, et un dispositif d'interruption qui met fin à la suite de la détermination et/ou de la fourniture en sortie d'alternatives de versions corrigées de la première séquence de symboles lorsqu'est reçu un accusé de réception positif d'une version corrigée de sortie ou d'une commande d'abandon venant de l'utilisateur ou lorsqu'une valeur limite définie comme critère d'abandon est atteinte.

13. Programme informatique comprenant des moyens de code de programme à même d'exécuter toutes les étapes du procédé suivant l'une quelconque des revendications 1 à 10 lorsque le programme est exécuté sur un ordinateur.

14. Programme informatique comprenant des moyens de code de programme suivant la revendication 13 qui sont stockés sur un support de données qui peut être lu par un ordinateur.
